# EUROPEAN PATENT SPECIFICATION

(11) **EP 2 954 175 B1**
(45) Date of publication and mention of the grant of the patent: **07.06.2023**
(21) Application number: 14743697.6
(22) Date of filing: 24.01.2014
(51) Int. Cl.: F01K 3/00, C25B 1/04, F01K 3/24, F01K 23/10, H02K 7/18, H02K 53/00

(54) **COMBINED BRAYTON/RANKINE CYCLE GAS AND STEAM TURBINE GENERATING SYSTEM OPERATED IN TWO CLOSED LOOPS**
IN ZWEI GESCHLOSSENEN REGELKREISEN BETRIEBENES KOMBINIERTES BRAYTON/RANKINE-ZYKLUS-GAS- UND DAMPFERZEUGUNGS-TURBINENSYSTEM
SYSTÈME DE GÉNÉRATION DE TURBINE À GAZ ET À VAPEUR À CYCLE DE BRAYTON/RANKINE COMBINÉ UTILISÉ EN DEUX BOUCLES FERMÉES

(30) Priority: 24.01.2013 US 201361756151 P
(43) Date of publication of application: 16.12.2015
(73) Proprietor: Hinders, Edward, San Antonio, Texas 78260 (US); Wallace, Richard, San Antonio, Texas 78260 (US)
(72) Inventor: SCHOENUNG, Susan, Menlo Park, California 94025 (US)
(74) Representative: Tomkinson, Alexandra
(86) International application number: PCT/US2014/013073
(87) International publication number: WO 2014/117040

(56) References cited:
- WO-A2-2012/013289
- US-A1- 2010 326 084
- US-A1- 2012 023 956
- US-A1- 2012 185 144
- US-B2- 6 910 335
- US-B2- 8 250 847

## Description

### BACKGROUND

This invention relates generally to a combined Brayton/Rankine cycle gas and steam turbine generating system operated in two closed loops from enhanced ground water or hot geothermal fluids and which burns only hydrogen and oxygen instead of a fossil fuel with air in the gas turbine.

Conventional combined cycle gas turbine power plants operate on natural gas or other hydrocarbon-based or fossil fuels combusted with air to heat a working fluid, usually feed water, to produce steam for operating turbine generators to produce electricity that is fed to a distribution grid to supply customers with electricity. Such plants produce waste heat that must be dissipated, typically in cooling towers, radiators, heat sinks, condensate reservoirs, etc. Even when waste heat can be transferred to the working fluid in some way or delivered to other uses such as heating systems, such mitigating techniques are only partly helpful in reducing inefficiencies. Other known inefficiencies in generating electricity using turbines include the limitations of using air as an oxidizing agent, the losses in portions of the system required to dissipate heat transfer working fluid and combustion air within the system, etc.

Electric generating plants operating on fossil fuels are also known to be substantial emitters of compounds that cause air pollution, chiefly carbon dioxide (C02), silicon dioxide (S02), nitric oxide (NO), and other substances such as dioxins, mercury, fly ash and other particulates, etc. Further, the use of hydrocarbon-based fuels such as petroleum, coal, and synthetics including "synthesis gas" or the so-called bio-diesel require large-scale mining, processing, and transport facilities and operations that are known to require very large capital investment, substantial uses of other non-renewable resources, or even cause significant environmental harm.

Most conventional power plants operate in open loop cycles. For example water, heated by boilers fired by hydrocarbon fuels, provides steam to drive turbines, which in turn drive generators to produce electricity. The waste heat contained in the spent steam exhausted from the turbine, while it may be utilized in heating plants or fed to cooling towers or reservoirs to dissipate the heat, is not recirculated back to the input of the system.

A classic closed loop system is the Brayton Cycle, first described by George Brayton for an oil burning engine in 1870. Note that a closed loop system is characterized by a system in which energy may be exchanged with its surroundings (across the system boundary) but the mass in the system remains constant, i.e., it is not exchanged with its surroundings or permitted to cross the system boundary. In a Brayton cycle, most often implemented in systems using a turbine fed by compressed air that is heated in a combustion section and allowed to expand in the turbine to spin its output shaft and a generator connected to it. Exhaust air from the turbine is then fed back to the input of the compressor through a heat exchanger. While the net change in mass in the system is zero (in an ideal closed system) because the working fluid - air - is returned to the input, the energy returned to the input will be diminished by the amount of heat converted to electricity in the system and the amount of heat given up to the surroundings because of system losses.

A number of schemes to recover the lost heat in such systems have been devised. In one method, a regenerator is used to transfer heat from the exhaust side to the compressed air routed to said combustion section. An intercooler may be used with two compressors operated in series by cooling the gas output from the first compressor before it enters the second one. The cooling increases the density of the compressed air thereby enhancing the compression ratio. In a third technique called reheating, used with two turbines operated in series by heating the exhaust from the first turbine before it enters the second one. The reheating increases the expansion ratio of the gases and thus the rotational drive to the generator.

Regardless of these enhancements, and the potential for more efficient generation of electricity in a closed loop system, inefficiencies remain, which limit the utility of closed loop systems. Heat losses are still significant, and the additional devices added to the basic system add complexity and cost. Yet, the use of gas turbine engines to generate electricity, while not new, because of their widespread use in aircraft and ocean-going vessels, and some power plant applications, may offer substantial economies because of their ready availability, reliability, etc. There appears to be significant promise for an electric generating system if a way could be found to operate a gas turbine engine in a closed loop using renewable energy by overcoming the inefficiencies in existing systems.

In one known closed loop system, recently developed by Sandia National Laboratories, a Brayton cycle gas turbine replaces air - the usual working fluid of a gas turbine engine - with supercritical carbon dioxide (C02) as a working fluid, which is said to be capable of boosting conversion efficiency of said gas turbine assembly 118 portion of a compact generating system from approximately 40% to perhaps 50%. The increased efficiency results from the greater density of the supercritical C02 - similar to that of a liquid - as compared with air, which is a gas having a much lower density. The supercritical C02, because of its greater density and much higher temperatures can convey greater amounts of heat to a gas turbine to generate more electricity. The efficiency increase enables correspondingly smaller footprints for the generating facility. However, accompanying the greater temperatures is a greater risk of corrosion in the gas turbine's components because of the presence of dilute carbonic acid.

To recap, existing power plant designs suffer from several disadvantages including (a) operation on fossil fuels - hydrocarbon-based substances that are not only non-renewable, but also, when burned, emit numerous by products into the atmosphere, contributing to climate change, environmental pollution, and potential harmful health effects. Further, (b) existing designs that burn fossil fuels to produce heat have relatively low efficiency, which results in depletion of nonrenewable resources at a faster rate than is prudent. In addition, (c) measures employed to mitigate the inherent inefficiencies tend to be complex, reducing reliability and increasing costs of manufacture, installation, and maintenance. Moreover, (d) operating a Brayton cycle plant on supercritical C02 risks shortened life and/or damage from the corrosion that results from the extremely high temperatures with this working fluid.

Other known designs include US Patent Numbers 5687559 and 577509, DE application number DE19808119A1 and particularly document WO2012/013289A2, which discloses the technical features of the preamble of independent claim 1. However, the current invention presents efficiency gains (such thermodynamic efficiency gains) as over these fillings.

What is needed is a generating system that operates with reduced environmental impact and contributions to air pollution, can rely on renewable resources and less on non-renewable resources, generates electricity with substantially greater efficiency and long life, has a compact footprint, and can be placed in operation and operated at lower costs.

None of the known inventions and patents, taken either singularly or in combination, is seen to describe the instant invention as claimed. Accordingly, it would be advantageous to have an improved cascaded gas and steam turbine generating system operated in a closed loop from enhanced ground water or geothermal fluids and which burns only hydrogen and oxygen instead of a fossil fuel with air in said gas turbine assembly.

### SUMMARY

A system and a method are disclosed.

The present invention provides a combined cycle dual closed loop electric generating system according to claim 1.

In one embodiment there is a method of using the combined cycle dual closed loop electric generating system, comprising: generating the first portion of the electric output with the gas turbine assembly by burning the portion of the H2 and said 02; circulating the gas turbine loop working fluid through the gas turbine loop and said the steam turbine loop working fluid through the steam turbine loop; heating said steam turbine loop with the first heat energy from said gas turbine loop with said first heat exchanger; conveying said steam turbine loop working fluid into said steam turbine assembly; and generating the second portion of said electric output with said steam turbine assembly.

### BRIEF DESCRIPTION OF THE DRAWINGS

Figure 1 illustrates a simplified block generating system diagram of a dual closed loop electric generating system.
Figures 2A and 2B illustrate a first method and a second method of using said dual closed loop electric generating system, respectively.
Figures 3A and 3B illustrate two detailed embodiments of said dual closed loop electric generating system.

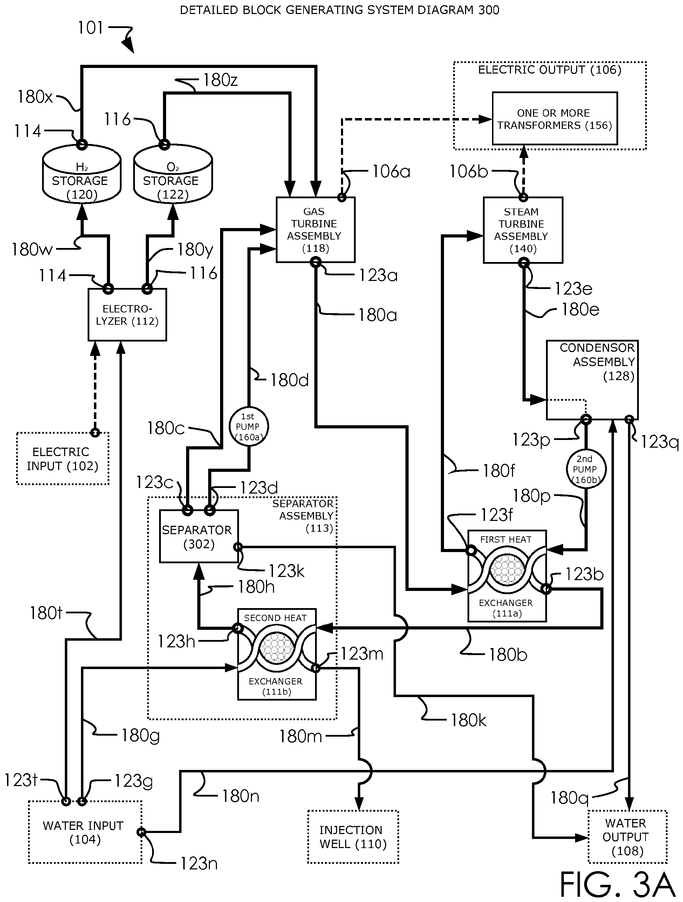

Figure 3A illustrates a detailed block generating system diagram.

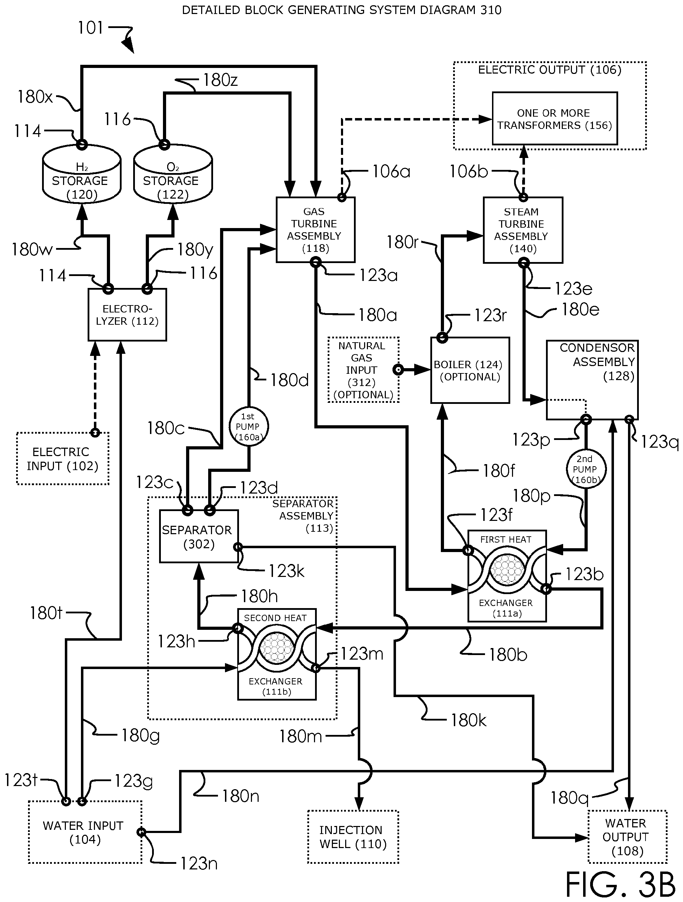

Figure 3B illustrates a detailed block generating system diagram.

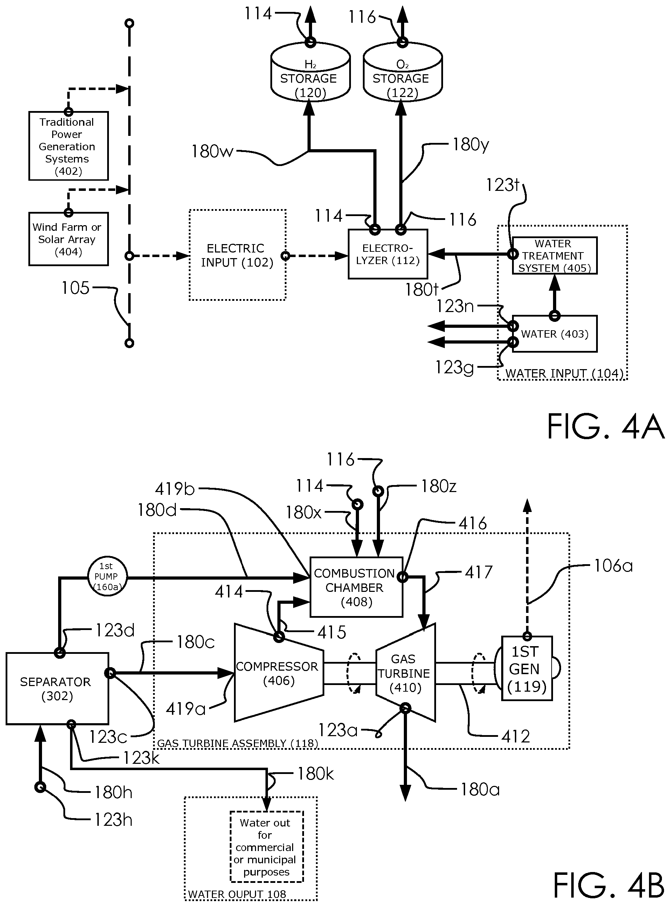

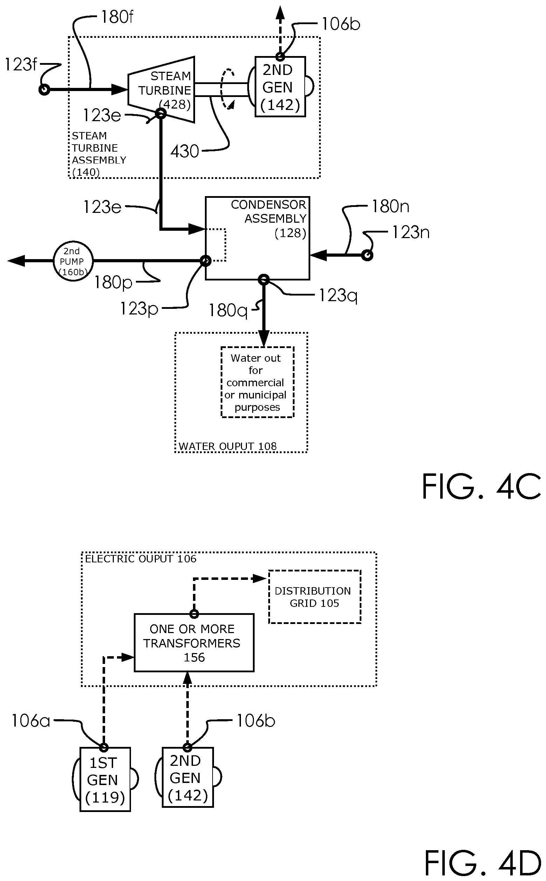

Figures 4A, 4B, 4C and 4D illustrate detailed portions of said simplified block generating system diagram.
Figure 4A illustrates a detailed view of said electric input.
Figure 4B illustrates a detailed view of said gas turbine assembly.
Figure 4C illustrates a detailed view of said steam turbine assembly.
Figure 4E illustrates a detailed view of said electric output.

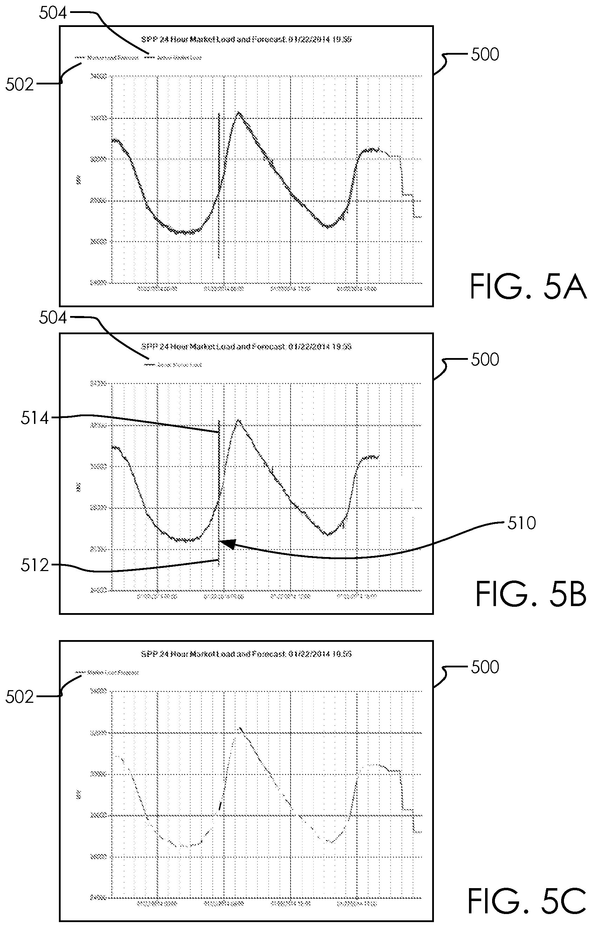

Figures 5A, 5B and 5C illustrate market load chart.
Figure 5A illustrates said market load chart with a market load forecast and an actual market load.
Figure 5B illustrates said market load chart with only said actual market load.
Figure 5C illustrates said market load chart with said market load forecast.

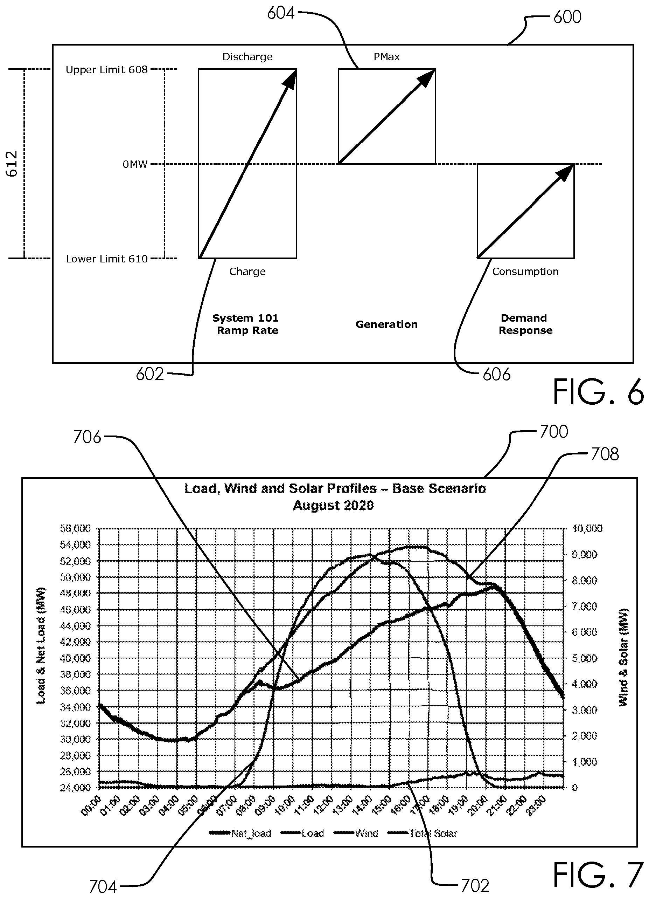

Figure 6 illustrates a resource model chart.
Figure 7 illustrates a base load scenario chart.

### DETAILED DESCRIPTION

Described herein is a combined Brayton/Rankine cycle gas and steam turbine generating system operated in two closed loops from enhanced ground water or hot geothermal fluids and which burns only hydrogen and oxygen instead of a fossil fuel with air in said gas turbine assembly 118.

The Figures depict the principle features of the invention, reference numbers that refer to the structural features forming the operative combination. Inputs and outputs of conductors for signals, fluids, and the like are indicated as follows: an input is indicated by an arrowhead pointing to a symbol for a component and an output is indicated by a line in contact with the symbol for a component and extending to a circle at the opposite end of the line. Examples of the principle components are illustrative for an exemplary, modest scale power plant of the 1 to 35 MegaWatt capacity. Appropriately scaled components are available for other power generation outputs. Unless otherwise designated, 2 pt. lines between components represent conduits with the corresponding inputs and outputs. Note that a person of ordinary skill in the art would be capable of selecting sufficiently adequate conduit for the connections between the components. Further, dashed lines are used to indicate electricity transmission lines with arrowheads used to indicate a direction of power flows.

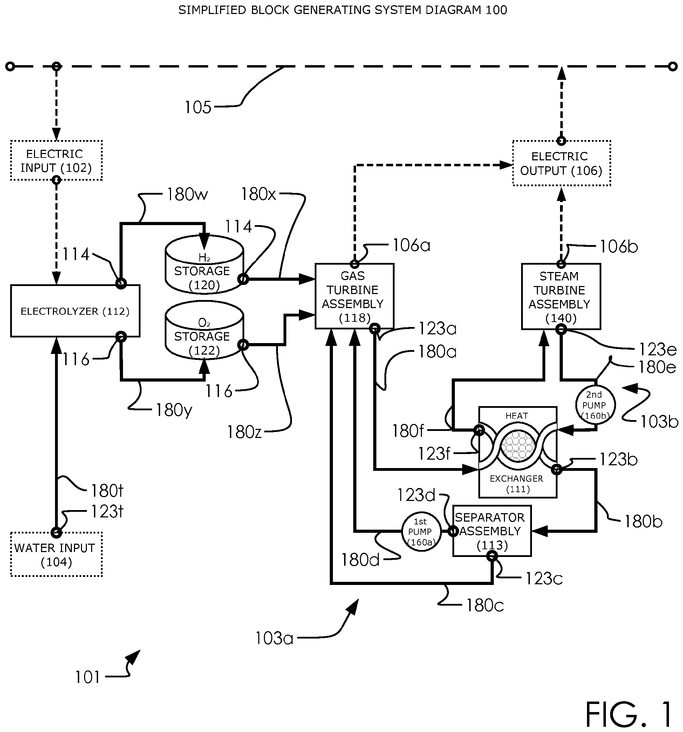

Figure 1 illustrates a simplified block generating system diagram 100 of a dual closed loop electric generating system 101. Note that simplified block generating system diagram 100 represents a minimalistic version of said dual closed loop electric generating system 101, many of the elements illustrated in Figure 1 are described and illustrated in more detail below.

In one embodiment, said dual closed loop electric generating system 101 comprises an electric input 102, a gas turbine loop 103 a, a steam turbine loop 103b, a water input 104, an electric output 106, a heat exchanger 111, an electrolyzer 112, a separator assembly 113, a gas turbine assembly 118, a H2 storage tank 120, an O2 storage tank 122, a steam turbine assembly 140, a plurality of conduits, a gas turbine loop working fluid and a steam turbine loop working fluid, a second pump 160b and a first pump 160a. The gas turbine loop 103a and said steam turbine loop 103b each comprise a closed loop system which convey said working fluids (which can be supplied by said water input 104) through said gas turbine assembly 118 and said steam turbine assembly 140 without comingling said gas turbine loop working fluid and said steam turbine loop between one another.

The gas turbine loop 103a and said steam turbine loop 103b are referred to together as two closed loops. The gas turbine loop 103a comprises the gas turbine loop working fluid and said steam turbine loop 103b comprises said the steam turbine loop working fluid. In one embodiment, said gas turbine loop working fluid and the steam turbine loop working fluid can be run into a water polisher and rust inhibitor.

In one embodiment, the elements found in said dual closed loop electric generating system 101 are connected by said plurality of conduits which are labeled with the label number "180" followed by a letter. For example, said plurality of conduits can comprise a first conduit 180a, a second conduit 180b, a third conduit 180c, a fourth conduit 180d, a fifth conduit 180e, a sixth conduit 180f, a seventh conduit 180g, an eighth conduit 180h, a ninth conduit 180k, a tenth conduit 180m, a eleventh conduit 180n a twelfth conduit 180p, a thirteenth conduit 180q, a fourteenth conduit 180r, a fifteenth conduit 180t, a sixteenth conduit 180w, a seventeenth conduit 180x, an eighteenth conduit 180y, and a nineteenth conduit 180z.

The gas turbine loop working fluid and the steam turbine loop working fluid in said dual closed loop electric generating system 101 are labeled with the label number "123" followed by a letter. For example, the working fluid in the different plurality of conduits are labelled working fluid 123a, working fluid 123b, working fluid 123c, working fluid 123d, working fluid 123e, working fluid 123f, working fluid 123g, working fluid 123h, working fluid 123k, working fluid 123m, working fluid 123n, working fluid 123p, working fluid 123q, working fluid 123r, and working fluid 123t.

In one embodiment, said gas turbine loop 103a comprises: said first conduit 180a carrying said working fluid 123a (which can substantially comprise a vapor) from said gas turbine assembly 118 to said heat exchanger 111 ; said second conduit 180b carrying said working fluid 123b (which can substantially comprise a vapor and a liquid) from said heat exchanger 111 to said separator assembly 113; said separator assembly 113 separating said working fluid 123b into said working fluid 123c (substantially comprising a vapor portion) and said working fluid 123d (substantially comprising a liquid portion); said fourth conduit 180d carrying said working fluid 123d from said separator assembly 113, through said first pump 160a and to said gas turbine assembly 118; and said third conduit 180c carrying said working fluid 123c from said separator assembly 113 to said gas turbine assembly 118. In one embodiment, said first pump 160a can regulate a flow rate of said working fluid 123d between gas turbine assembly 118 and said separator assembly 113.

Likewise, in one embodiment, said steam turbine loop 103b comprises: said fifth conduit 180e carrying said working fluid 123e from said steam turbine assembly 140 to said heat exchanger 111, said sixth conduit 180f carrying said working fluid 123f from said heat exchanger 111 to said steam turbine assembly 140, and said second pump 160b regulating a flow rate of said working fluid 123e.

In one embodiment, said electrolyzer 112 can receive said electric input 102 and said water input 104 and generate the H2 114 and the O2 116, which can be stored in said H2 storage tank 120 and said O2 storage tank 122, respectively. In one embodiment, said conduit 180t can carry said working fluid 123t of said water input 104 to said electrolyzer 112. In one embodiment, said sixteenth conduit 180w can carry said H2 114 from said electrolyzer 112 to said H2 storage tank 120 and a seventeenth conduit 180x can carry said H2 114 from said H2 storage tank 120 to said gas turbine assembly 118. Likewise, in one embodiment, said eighteenth conduit 180y can carry said O2 116 from said electrolyzer 112 to said O2 storage tank 122 and said nineteenth conduit 180z can carry said O2 116 to said gas turbine assembly 118 from said O2 storage tank 122. In one embodiment, said dual closed loop electric generating system 101 can bypass said H2 storage tank 120 and/or said O2 storage tank 122 where storage of said H2 114 and/or said O2 116 is unnecessary.

In one embodiment, said gas turbine assembly 118 burns a portion of said H2 114 and said O2 116 and generates a first portion 106a of said electric output 106. In one embodiment, said gas turbine assembly 118 can heat said working fluid 123d and said working fluid 123c while generating said first portion 106a of said electric output 106. Alternatively, in one embodiment, said working fluid 123c and said working fluid 123d can enter said gas turbine assembly 118 cooler than when it exits said gas turbine assembly 118 in the form of said working fluid 123a.

In one embodiment, said dual closed loop electric generating system 101 can receive and deliver power to a distribution grid 105. In one embodiment, said distribution grid 105 can comprise power generating equipment such as wind and solar arrays, traditional power generation, and/or similar as would be known to one in the art.

Said heat exchanger 111 cools said working fluid 123a. Thus, in one embodiment said working fluid 123b can be cooler than said working fluid 123a. Accordingly, said heat exchanger 111 serves to transfer heat from said gas turbine loop 103a to said steam turbine loop 103b.

Said working fluid 123f enters said steam turbine assembly 140 hotter than when it exits as said working fluid 123e. Said heat exchanger 111 serves to transfer heat energy from gas turbine loop 103a and into said steam turbine loop 103b. In one embodiment, said steam turbine assembly 140 can generate a second portion 106b using said first heat energy.

The gas turbine assembly 118 and said steam turbine assembly 140 drive a plurality of generators (comprising of said first generator 119 and said second generator 142) to produce electric power; wherein, in a preferred embodiment, this production is accomplished without carbon-based emissions.

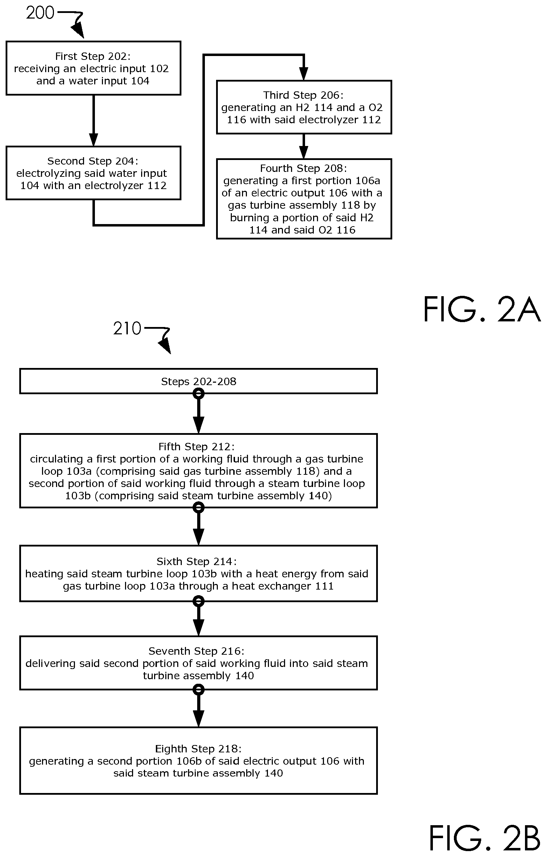

Figures 2A and 2B illustrate a first method 200 and a second method 210 of using said dual closed loop electric generating system 101, respectively.

Regarding Figure 2A, in one embodiment, said first method 200 of using said dual closed loop electric generating system 101 can comprise: a first step 202 of receiving said electric input 102 and said water input 104; a second step 204 of electrolyzing said water input 104 with said electrolyzer 112; a third step 206 of generating an H2 1 14 and an O2 116 with said electrolyzer 112; and a fourth step 208 of generating said first portion 106a of said electric output 106 with said gas turbine assembly 118 by burning a portion of said H2 114 and said O2 116.

Regarding Figure 2B, in one embodiment, said second method 210 of using said dual closed loop electric generating system 101 can comprise the steps of said first method 200 and further comprising: a fifth step 212 of circulating a first portion of said working fluid through said gas turbine loop 103 a and a second portion of said working fluid through said steam turbine loop 103b; a sixth step 214 of heating said steam turbine loop 103b with said first heat energy from said gas turbine loop 103a through said heat exchanger 111; a seventh step 216 of delivering said second portion of said working fluid into said steam turbine assembly 140; and an eighth step 218 of generating a second portion 106b of said electric output 106 with said steam turbine assembly 140.

In one embodiment, said first portion of said working fluid can comprise said working fluid 123a, said working fluid 123b, said working fluid 123c and said working fluid 123d. In one embodiment, said second portion of said working fluid can comprise said working fluid 123e and said working fluid 123f.

Figures 3A and 3B illustrate two detailed embodiments of said dual closed loop electric generating system 101. By way of comparison, Figures 3A and 3B have additional detail as opposed to Figure 1. For example, in one embodiment, said heat exchanger 111 of said simplified block generating system diagram 100 is broken into a first heat exchanger 111a and a second heat exchanger 111b. Additional elements have been added such as a boiler 124 (Figure 3B), a condenser assembly 128, and a separator 302.

Figure 3 A illustrates a detailed block generating system diagram 300. Said detailed block generating system diagram 300 comprises a preferred embodiment of said dual closed loop electric generating system 101.

In one embodiment, said gas turbine assembly 118 can receive said H2 114 through said seventeenth conduit 180x, said O2 116 through said nineteenth conduit 180z, said working fluid 123c through said third conduit 180c and said working fluid 123d through said fourth conduit 180d. In turn, said gas turbine assembly 118 can generate said first portion 106a by burning a portion of said H2 114 and said O2 116, as is known in the art. In one embodiment, said first portion 106a can be passed from said dual closed loop electric generating system 101 to said distribution grid 105 through one or more transformers 156.

Turning now to said gas turbine loop 103a, in one embodiment, said separator assembly 113 can comprise said second heat exchanger 111b and said separator 302. In one embodiment, said separator assembly 113 can receive said working fluid 123b (through said second conduit 180b) and working fluid 123g (through a seventh conduit 180g). In one embodiment, said separator assembly 113 can comprise said second heat exchanger 111b and said separator 302. In one embodiment, said separator assembly 113 can separate a liquid stream (said working fluid 123d) and a vapor stream (said working fluid 123c) from said working fluid 123b by: cooling said working fluid 123b into working fluid 123h with said second heat exchanger 111b; delivering said working fluid 123h to said separator 302 in an eighth conduit 180h; separating said working fluid 123c from said working fluid 123d with said separator 302; and discharging a working fluid 123k from said separator 302 to said water output 108 through a ninth conduit 180k. In one embodiment, said second heat exchanger 1 11b cools said working fluid 123b by: receiving said working fluid 123g from said water input 104; transferring a first heat energy from said working fluid 123b into said working fluid 123g; and discharging working fluid 123m from said second heat exchanger 111b and into said injection well 110 through a tenth conduit 180m. In one embodiment, a volume of fluid discharged from said dual closed loop electric generating system 101 at said working fluid 123k can substantially equal to a volume of fluid received into said dual closed loop electric generating system 101 at said electrolyzer 112. Albeit not simultaneously, this conservation of matter is the effect of said H2 114 and said O2 116 recombining into H2O.

Turning now to said steam turbine loop 103b, in one embodiment, said working fluid 123e can be cooled with said condenser assembly 128 between said steam turbine assembly 140 and said first heat exchanger 111a. In one embodiment, said condenser assembly 128 can receive said working fluid 123e (through said fifth conduit 180e), and working fluid 123n from said water input 104 through an eleventh conduit 180n. In one embodiment, said working fluid 123n can comprise water. In one embodiment, said condenser assembly 128 can receive said working fluid 123e and discharge as working fluid 123p through a twelfth conduit 180p to said first heat exchanger 111a. In one embodiment, said condenser assembly 128 can discharge working fluid 123q through a thirteenth conduit 180q. In one embodiment, said first heat exchanger 111a can heat said working fluid 123p in the manner described above when describing said heat exchanger 111; namely, said first heat exchanger 111a can heat said steam turbine loop 103b with said first heat energy from said gas turbine loop 103a.

The heat exchanger 111 may preferably be a custom fabricated, fully cross-flow unit designed for maximum heat transfer with minimum external losses. In one embodiment interleaved demand side and source side passages are respectively defined and implemented for conducting the gas turbine exhaust and steam turbine working fluid respectively. Similarly, the separator may preferably be a custom design adapted to efficiently separating liquid and vapor phase substances from the turbine exhaust stream. The boiler may be a standard type. The generators may be supplied by such manufacturers as Skinner Power Systems^{®} of Erie, Pennsylvania or Asea Brown Bovieri (ABB^{®}) of Zurich, Switzerland. The transformers may be available from Allis-Chalmers Energy^{®} of Houston, Texas, or Siemens Corporation^{®}.

Figure 3B illustrates a detailed block generating system diagram 310. In one embodiment, said detailed block generating system diagram 310 can comprise an embodiment of said dual closed loop electric generating system 101 further comprising a boiler 124 which can heat said working fluid 123f prior to entry into said steam turbine assembly 140. For example, in one embodiment, said boiler 124 can receive a natural gas input 312 which can heat said working fluid 123f and deliver working fluid 123r in a fourteenth conduit 180r to said steam turbine assembly 140. In one embodiment, said boiler 124 can be optional to said dual closed loop electric generating system 101. In one embodiment, said natural gas input 312 can comprise an excess natural gas which may otherwise be flared; wherein, said dual closed loop electric generating system 101 can receive a flare gas and convert it into said electric output 106, which can in turn, be turned to fill said H2 storage tank 120 and/or said O2 storage tank 122 for later use.

As discussed, in one embodiment, said boiler 124 can be fueled by said natural gas input 312. In one embodiment, said natural gas input 312 can comprise methane (CH4) separated from said water input 104 (the geothermal fluid) or from some other source, which may be conveyed through a separate conduit (not shown). It will be appreciated that the geothermal and working fluids, the hydrogen and oxygen gases, the steam in various states, and the electricity are not part of the structure of the system but rather the operative subject matter processed by the system to produce electricity.

In one embodiment, the basic source of first heat energy for operation of the dual closed loop electric generating system 101 may be a geothermal fluid or a ground water obtained from a deposit accessed via well a well, as is known in the art, below the Earth's surface. The ground water or geothermal fluid - chiefly brine, which may contain a variety of fluids bearing minerals or hydrocarbons in liquid form - enters the system via said water input 104. In one embodiment, said geothermal fluid is conveyed through said dual closed loop electric generating system 101 (as discussed) followed by the exit of the cooled geothermal fluid through said tenth conduit 180m and said thirteenth conduit 180q, at said injection well 110 and said water output 108 respectively. In one embodiment, said water output 108 can comprise an injection well or a municipal use as discussed below. Alternatively, the cooled geothermal fluid may be stored for later processing or shipment (not illustrated).

The geothermal fluid, following separation of certain corrosive or unneeded substances, typically in gaseous or vapor form, from the raw material obtained from the subsurface deposits, may be conveyed via fifteenth conduit 180t to said electrolyzer 112 for processing to produce said H2 114 and said 02 116.

Figures 4A, 4B, 4C and 4D illustrate detailed portions of said simplified block generating system diagram 100.

Figure 4A illustrates a detailed view of said electric input 102. In one embodiment, said electric input 102 can comprise an electrical input from said distribution grid 105, which can acquire power from a traditional power generation system 402 or a wind or solar array 404. Electricity for operation of said electrolyzer 112 may be supplied by said distribution grid 105 or renewable sources (such as wind or solar array 404).

In one embodiment, said electrolyzer 112 can comprise a self-contained electrolyzer for separating said H2 114 and said O2 116 from said water input 104 (substantially comprising H2O). Thereafter, said H2 114 and said O2 116 can be burned by said gas turbine assembly 118 to produce supercritical steam at higher pressures and temperatures that directly or indirectly drive said gas turbine assembly 118 and said steam turbine assembly 140 at enhanced efficiency.

In one embodiment, said electrolyzer 112 can comprise an ITM Power Electrolyzer, which may produce hydrogen and oxygen at pressure. In one embodiment, said electrolyzer 112 can comprise a 15 kW unit manufactured by Giner Electrochemical Systems, LLC, of Newton, MA, a lightweight electrolyzer stack for use in light weight, high altitude aircraft.

In one embodiment, said electrolyzer 112 can require a source of mineralized water. In one embodiment, said water input 104 can comprise a water 403 in fluid connection with a water treatment system 405. In one embodiment, said water 403 can comprise a geothermal fluid as is known in the art. In one embodiment, said water treatment system 405 can remove chemicals and hydrocarbons from said water 403 leaving water and ordinary minerals necessary for a proper operation of said electrolyzer 112. In one embodiment, said water 403 need not be filtered and treated by said water treatment system 405 for use as said eleventh working fluid 123n and said seventh working fluid 123g. In one embodiment, said water 403 can comprise a ground water or a municipal water source.

Said electrolyzer 112 can be operated from electricity drawn from said distribution grid 105, which can comprise of renewable sources (such as said wind or solar array 404), from fuel cells, or from either or both of said gas turbine assembly 118 and said steam turbine assembly 140. The outputs from said electrolyzer 112 include substantially pure oxygen (O2 116) and hydrogen (H2 114), which are conveyed to respective storage tanks via respective conduits. In one embodiment, said electrolyzer 112 can comprise a cathode (not illustrated) and an anode (not illustrated), as is known in the art. In one embodiment, said eighteenth conduit 180y is coupled to said anode within said electrolyzer 112, which supplies said O2 116. Similarly, in one embodiment, said sixteenth conduit 180w can be coupled to said cathode within said electrolyzer 112, which supplies said H2 114. In one embodiment, during operation of said dual closed loop electric generating system 101, said H2 114 and said O2 116 are conveyed to the respective input ports of a combustion chamber 408 (illustrated and discussed below) within said gas turbine assembly 118.

Figure 4B illustrates a detailed view of said gas turbine assembly 118. In one embodiment, said gas turbine assembly 118 can comprise a first generator 119, a compressor 406, said combustion chamber 408, a gas turbine 410 and a first driveshaft 412. In one embodiment, said compressor 406 receives said working fluid 123c (which can comprise a vapor) through said third conduit 180c. In one embodiment, said compressor 406 can compress said working fluid 123c and work in conjunction with said gas turbine 410. In one embodiment, said compressor 406 can produce working fluid 414 and deliver said working fluid 414 to said combustion chamber 408 through a twentieth conduit 415. In one embodiment, said combustion chamber 408 can receive: said H2 114 through said seventeenth conduit 180x; said O2 116 through said nineteenth conduit 180z; said working fluid 414 through said twentieth conduit 415; and said working fluid 123d through said fourth conduit 180d. In one embodiment, said combustion chamber 408 can produce working fluid 416 which can be delivered to said gas turbine 410 through a twenty-first conduit 417. In one embodiment, said gas turbine 410 can use said working fluid 416 to drive said first driveshaft 412. In one embodiment, said gas turbine 410 can comprise an exhaust which can comprise said working fluid 123a.

In one embodiment, said first driveshaft 412 can be rotatably attached to said first generator 119; wherein, said gas turbine 410 can drive said first driveshaft 412 and said first generator 119 can generate said first portion 106a, as is known in the art.

In one embodiment, said separator 302 can regulate a the proportions of vapor admitted into an inlet 419a of said compressor 406 via said third conduit 180c and the proportion of liquid admitted into said combustion chamber 408 (at a water injection port 419b) through said fourth conduit 180d. In one embodiment, said water injection port 419b can be located in the aft- most portion of said combustion chamber 408. In one embodiment, said separator 302 can divide said vapor into said working fluid 123c and said liquid into said working fluid 123d, as discussed above. In one preferred operating embodiment, said working fluid 123c can comprise approximately 25% of said working fluid 123g and said working fluid 123d can comprise the balance of said working fluid 123g.

In one embodiment, said working fluid 123c (comprising a vapor) which can be used by said compressor 406 can be limited by the flow volume rate of the inlet 419a at said compressor 406 (i.e., the stall limit of said compressor 406). This limitation is necessary to prevent stalling of the engine. The balance of the said working fluid 123c can be fed to said combustion chamber 408 at said water injection port 419b. In one embodiment, this is conveniently accomplished when a type T56- A gas turbine engine (manufactured by Rolls-Royce^{®}) is used because it is equipped with a water injection port (not shown figures) just after the combustion chamber ("burn can"). There, the working fluid (which can comprise a portion of said water input 104) is mixed with said H2 114 and said O2 116 and reheated to drive said gas turbine 410. In one embodiment, the working fluid fed to said water injection port 419b, which increases the volume of steam and also cools the steam to a temperature that meets a one or more metallurgical specifications of the components in said gas turbine 410. In one embodiment, said working fluid and a combustion product are mixed in the exhaust section of said gas turbine assembly 118 at said working fluid 123a.

In one embodiment, the combustible materials (that is, the inputs of said combustion chamber 408) for the system include pure hydrogen H2 and pure oxygen 02 produced by said electrolyzer. The incoming high pressure/low temperature working fluid at water injection port 419b from said separator 302 undergoes a compression on the order of 12: 1 to 16: 1 in said first water pump 160a, and the compressed working fluid is mixed in said combustion chamber 408 with said H2 114 and said O2 116, preferably mixed in a ratio of 1kg of said H2 114 to 8kg of said O2 116, as measured in a flow meter (not shown) and checked by steam analysis (not shown), to produce supercritical steam for driving said gas turbine 410. In one embodiment, said H2 114 and said O2 116 gases are used as fuel instead of a fossil fuel or other carbon-based fuel mixed with atmospheric air for two reasons: (a) to increase the temperature of the steam to supercritical levels; and (b) to eliminate the release of carbon dioxide (CO2) into the atmosphere. As is well known, the combination of carbon-based fuels (e.g., coal, fuel oil, natural gas, etc.) and air, while they provide said combustion fuels used in conventional power plants, suffer from the inefficiencies of low temperatures and harmful environmental effects of emissions to the atmosphere and corrosion of components of said dual closed loop electric generating system 101.

Examples of said gas turbine 410 and steam turbine 428, for use in said dual closed loop electric generating system 101, include a type T56-A series gas turbine manufactured by Rolls-Royce^{®}; and a type SST-200 steam turbine manufactured by the Siemens Corporation^{®} of Germany respectively.

Figure 4C illustrates a detailed view of said steam turbine assembly 140. The steam turbine assembly 140 comprises a steam turbine 428, a second driveshaft 430, and a second generator 142. In one embodiment, said steam turbine 428 can receive said working fluid 123f (comprising a vapor); wherein, said steam turbine 428 can drive said second driveshaft 430 with energy received from said working fluid 123f; further wherein, said second driveshaft 430 can drive said second generator 142 which can, in turn, generate said second portion 106b of said electric output 106.

In one embodiment, said steam turbine assembly 140 can receive said working fluid 123f through said sixth conduit 180f and discharge said working fluid 123e into said fifth conduit 180e. In one embodiment, said working fluid 123e can comprise an exhaust liquid + vapor which then condensates into said condenser assembly 128. In one embodiment, said condenser assembly 128 can receive said working fluid 123e through said fifth conduit 180e and said working fluid 123n through said eleventh conduit 180n. In one embodiment, said condenser assembly 128 can comprise said working fluid 123p through said twelfth conduit 180p and said working fluid 123q through said thirteenth conduit 180q. In one embodiment, said working fluid 123n and said working fluid 123e do not comingle; rather, said working fluid 123n is used to cool and condense said working fluid 123e.

In one embodiment, said working fluid 123q can exit said dual closed loop electric generating system 101 at said water output 108 (illustrated) or may be reused at said water input 104 (not illustrated). In one embodiment, said water output 108 can be used for commercial or municipal purposes. In one embodiment, said working fluid 123q can be referred to as "off-take" fluids. In one embodiment, said working fluid 123q can comprise a substantially pure water fluid which may need to be blended down for human uses, as is known in the art.

The steam turbine assembly 140 drives a shaft 430 which, in turn, drives said second generator 142 generating said second portion 106b of said electric output 106.

Figure 4E illustrates a detailed view of said electric output 106. In one embodiment, said electric output 106 can further comprise said one or more transformers 156 to collect and transform said first portion 106a and said second portion 106b of said electric output 106, which is transmitted onto said distribution grid 105. In one embodiment, a grid operator or system designer can determine a proper number of said one or more transformers 156 to use according to preference, safety and budget, as is known in the art. For example, in one embodiment, it is known that in ring-bus systems a redundant transformer is often used.

Figures 5A, 5B and 5C illustrate market load chart 500. Figure 5A illustrates said market load chart 500 with a market load forecast 502 and an actual market load 504. Figure 5B illustrates said market load chart 500 with only said actual market load 504. Figure 5C illustrates said market load chart 500 with said market load forecast 502. Said market load chart 500 represents a publicly available chart from the Southwest Power Pool (spp.org) and is data from the grid operator.

As is known in the art, said actual market load 504 does not always match said market load forecast 502. Accordingly, although grid operators spend much effort predicting said actual market load 504 they are not exactly right. The delta between said market load forecast 502 and said actual market load 504 represents a meaningful problem for grid operators. In one embodiment, said dual closed loop electric generating system 101 can help to overcome unexpected spikes and drops in said actual market load 504 as said dual closed loop electric generating system 101 is capable of cheaply ramping up to meet unexpected demand. Conversely, where said dual closed loop electric generating system 101 is used to provide a portion of the base load for said market load forecast 502, said dual closed loop electric generating system 101 can be used to absorb over production of power by purchasing such over production and converting the same into said H2 114 and said O2 116.

Said market load chart 500 also illustrates a system event 510 comprising an unexpected load drop 512 and a rebalancing compensation 514. In one embodiment, said system event 510 can comprise an event on said actual market load 504 which differs substantially from what was anticipated by said market load forecast 502. Here, said unexpected load drop 512 may have been caused by equipment failure or many other unexpected circumstances. In this case, the system over compensated at said rebalancing compensation 514 and eventually leveled back out at and around said market load forecast 502.

Said simplified block generating system diagram 100 includes several novel features that accord a number of advantages to the generation of electric power from renewable sources of energy in a two-closed loop water / steam system based on a gas turbine and steam turbine combination operating in a combined Brayton/Rankine cycle.

First, said gas turbine assembly 118 is fired by pure hydrogen (H2) and pure oxygen (O2) that is fed to said combustion chamber 408 of said gas turbine assembly 118 to produce supercritical steam. Thus, (a) said combustion pressure and temperature is much higher than would be the case if air (which is only 20% oxygen) is used as in conventional power plants. This mixture produces the supercritical steam exhausting said combustion chamber at high pressure, thus having a higher energy content for driving said gas turbine assembly 118 and generator combination. The supercritical steam produced using pure hydrogen and oxygen is also much less prone to causing corrosion than other materials; (b) in addition, mixing steam fed into said combustion chamber from the compressor with said H2 114 and said O2 116 being burned in said combustion chamber adds mass to keep the steam in said combustion chamber within the thermal limits of the materials used in said gas turbine assembly 118 that drives the generator; further, (c) since the only combustion product is steam no harmful air pollutants or corrosive substances are produced as would the case be with using atmospheric air agent that must be heated along with the oxygen constituent of air, which would otherwise represent a substantial loss of heat to the system.

Second, efficiencies are found in the reuse of heat at said heat exchanger 111 (Figure 1) and/or said first heat exchanger 111a (Figure 3A-3B).

Third, combining said gas turbine assembly 118 and said steam turbine assembly 140 in two closed loops (a) protects said gas turbine assembly 118 from damage due to foreign objects that are prone to being drawn into the system in an open-loop, air- fed system, thus reducing down time due to repairs and maintenance. Further, (b) closed loop operation means that said dual closed loop electric generating system 101 operates under standard ISO conditions 100% of the time, that is, 15 Centigrade, 60% relative humidity, and sea level atmospheric pressure of 29.72 in Hg. Moreover, (c) the lack of emissions of carbon compounds (where applicable) into the atmosphere eliminates air pollution by these substances.

In operation, the closed loop, cascaded architecture of said dual closed loop electric generating system 101, which uses pure hydrogen and oxygen as fuel and geothermal or ground water as feed water or an initial heat source, provides the opportunity for increased efficiency and substantially reduced losses, as well as a substantial reduction in harmful emissions into the atmosphere.

In one embodiment, said dual closed loop electric generating system 101 can be useful for providing VARs as required by said distribution grid 105. In electric power transmission and distribution, volt-ampere reactive (var) is a unit used to measure reactive power in an AC electric power system. Reactive power exists in an AC circuit when the current and voltage are not in phase. In one embodiment, reactive power is produced by inductance as per Henry's law and not imbalances. The imbalances cause loss of voltage control. In one embodiment, a plurality of said dual closed loop electric generating system 101 can be distributed on said distribution grid 105 to provide corrective VARs to said distribution grid 105 as needed. In one embodiment, said dual closed loop electric generating system 101 can filter and balance VAR requirements on said distribution grid 105.

Figure 6 illustrates a resource model chart 600. In one embodiment, said resource model chart 600 can illustrate a resource that can move seamlessly from load to generation. In one embodiment, said resource model chart 600 can comprise a system ramp rate column 602 (representing a ramp rate for said dual closed loop electric generating system 101), a generation column 604 and a demand response column 606. In one embodiment, said resource model chart 600 can illustrate a power consumption and generation principle between an upper limit 608 and a lower limit 610. In one embodiment, said dual closed loop electric generating system 101 can ramp up go meet needs of said distribution grid 105 quicker than alternative systems and store power when generation is beyond demand. This ability to quickly ramp up and store extra power serves to make said dual closed loop electric generating system 101 an invaluable tool for operators of said distribution grid 105.

Said resource model chart 600 has been based on a similar chart found in the California ISO presentation by Greg Cook at APEC Conference on 10/30/2013 in New York, NY.

Said resource model chart 600 can comprise a maximum ramp 612 representing a sum of the absolute values of said upper limit 608 and said lower limit 610. In one embodiment, said maximum ramp 612 can comprise a distance which must be overcome by power systems, and said maximum ramp 612 is forecasted to increase based on future demands on power systems. Accordingly, said dual closed loop electric generating system 101 can help to accommodate power ramp rate needs.

Alternatively, in one embodiment, said dual closed loop electric generating system 101 can use said electrolyzer to provide system balancing capture spilled wind, filter harmonics and transients from large induction sources and resolve zero sequence issues. Indeed, said dual closed loop electric generating system 101 can react nearly instantaneously to balance loads on said distribution grid 105.

Figure 7 illustrates a base load scenario chart 700. In one embodiment, said base load scenario chart 700 can illustrate a load over time for the year 2020 in California. In one embodiment, said base load scenario chart 700 can comprise values for a wind load 702, a total solar load 704, a net load 706 and a load 708. Said base load scenario chart 700 illustrates the variability of said wind load 702 and said total solar load 704 when forecasting power generation. Accordingly, the rapid ramp rate of said dual closed loop electric generating system 101 can be used to assist in this power management environment. Thus, in one embodiment said dual closed loop electric generating system 101 can use its reservoirs of said H2 114 and said O2 116 to help manage the demands of said distribution grid 105. Indeed, said dual closed loop electric generating system 101 can assist in dealing with sudden gusts of wind represented in said wind load 702, or a passing cloud represented in said total solar load 704 by storing power between times of production and times of consumption. Ultimately, this technology will assist in rolling out more of said wind or solar array 404 as managers now have a tool for using power which they generate.

Note that said base load scenario chart 700 has been take from a presentation by Mr. Mark Rothleder to the Innovating for Flexibility 2013 Summer Seminar of the California ISO of August 5, 2013.

In one alternative embodiment the boiler in the steam turbine input loop may be optional.

Various changes in the details of the illustrated operational methods are possible without departing from the scope of the following claims. Some embodiments may combine the activities described herein as being separate steps. Similarly, one or more of the described steps may be omitted, depending upon the specific operational environment the method is being implemented in. It is to be understood that the above description is intended to be illustrative, and not restrictive. For example, the above-described embodiments may be used in combination with each other. Many other embodiments will be apparent to those of skill in the art upon reviewing the above description. The scope of the invention should, therefore, be determined with reference to the appended claims. In the appended claims, the terms "including" and "in which" are used as the plain-English equivalents of the respective terms "comprising" and "wherein."

## Claims

1. A combined cycle dual closed loop electric generating system, comprising:
a gas turbine assembly (118) comprising a combustion chamber (408), a compressor (406), a first pump (160a), a first driveshaft (412), a gas turbine (410) and a first generator (119);
a steam turbine assembly (140) comprising a second pump (160b), a second driveshaft (430), a steam turbine (428) and a second generator (142);
a gas turbine loop (103a) capable of holding and conveying a gas turbine loop working fluid (123);
a steam turbine loop (103b) capable of holding and conveying steam turbine loop working fluid (123);
**characterised in that** said gas turbine loop (103a) and said steam turbine loop (103b) each comprise a closed loop system for conveying said gas turbine loop working fluid (123) and said steam turbine loop working fluid (123) through said gas turbine assembly (118) and said steam turbine assembly (140) without co-mingling said gas turbine loop working fluid (123) and said steam turbine loop working fluid (123) between one another; said gas turbine loop working fluid and said steam turbine loop working fluid (123) comprising a liquid and a vapor at different stages within said gas turbine and steam turbine closed loops;
said gas turbine loop working fluid (123) circulates through the gas turbine assembly (118), the first pump (160a) and a first heat exchanger (111);
said steam turbine loop working fluid (123) circulates through the steam turbine assembly (140), the second pump (160b) and said first heat exchanger (111);
said first heat exchanger (111) transfers first heat energy from said gas turbine loop (103a) to said steam turbine loop (103b); said gas turbine assembly (118) generates a first portion of an electric output (106) by burning H₂ and O₂ running said gas turbine (410) and driving said first generator (119); and
said steam turbine assembly (140) generates a second portion of said electric output (106); and an electrolyzer (112) is provided to generate H₂ (114) and 0₂ (116) and storage tanks (120, 122) are provided to store said H₂ and O₂ separately, prior to use by the gas turbine assembly (118).

2. The combined cycle dual closed loop electric generating system of claim 1, wherein:
said gas turbine loop (103a) comprises
the gas turbine assembly (118), the first pump (160a) and a separator assembly (113);
a first conduit (180a) carrying the gas turbine loop working fluid (123) comprising an exhaust from said gas turbine assembly (118) to said first heat exchanger (111),
a second conduit (180b) carrying the gas turbine loop working fluid (123) from said first heat exchanger (111) to the separator assembly (113),
a third conduit (180c) carrying the gas turbine loop working fluid (123) in a vapor phase from said separator assembly (113) to said gas turbine assembly (118), and
a fourth conduit (180d) carrying the gas turbine loop working fluid (123) in liquid form from said separator assembly (113) to said gas turbine assembly (118);
said fourth conduit (180d) comprises said first pump (160a) capable of regulating a flow rate of said gas turbine loop working fluid (123) through said fourth conduit (180d); and
said separator assembly (113) is capable of separating said gas turbine loop working fluid (123) into
the vapor phase and
the liquid form.

3. The combined cycle dual closed loop electric generating system of claim 1, wherein:
said steam turbine loop (103b) comprises
the steam turbine assembly (140), the second pump (160b) and the first heat exchanger (111);
a fifth conduit (180e) conveying the steam turbine loop working fluid (123) comprising an exhaust from said steam turbine assembly (140) to said first heat exchanger (111), and
a sixth conduit (180f) conveying the steam turbine loop working fluid (123) from said first heat exchanger (111) to said steam turbine assembly (140);
said first heat exchanger (111) capable of heating said steam turbine loop working fluid (123) prior to being conveying back to said steam turbine assembly (140); and
said second pump (160b) is placed on said fifth conduit (180e) and capable of regulating a flow rate of said steam turbine loop working fluid (123) from said steam turbine assembly (140) to a second heat exchanger (111b);
said first heat exchanger (111) transfers heat energy from said gas turbine loop working fluid (123) of said gas turbine assembly (118) to the steam turbine loop working fluid (123) of the steam turbine assembly (140) from a condenser assembly (128) regulated by said second pump (160b).

4. The combined cycle dual closed loop electric generating system of claim 2, wherein:
said separator assembly (113) comprises a second heat exchanger (111b) and a separator (302); said second conduit (180b) conveys said gas turbine loop working fluid (123) from said first heat exchanger(111) to said second heat exchanger (111b);
a seventh conduit (180g) conveys the gas turbine loop working fluid (123) from a water input (104) to said second heat exchanger (111b) in a tenth conduit (180m) after cooling the gas turbine loop working fluid that enters the second heat exchanger (111b) and leaves in an eighth conduit (180h) to the separator (302);
the gas turbine loop working fluid (123) in vapor form from said separator (302) enters said compressor (406) using the third conduit (180c);
the gas turbine loop working fluid (123) in liquid form from said separator (302) enters said combustion chamber (408) using the fourth conduit (180d);
the H₂ (114) and O₂ (116) from their respective storage tanks (120, 122) enters said combustion chamber (408) and is burnt in the combustion chamber (408) mixed in a ratio of 1Kg of H₂ and 8Kg of O₂ under pressure above atmosphere;
the compressed gas turbine loop working fluid (123) in vapor form from said compressor (406) and the gas turbine loop working fluid (123) in liquid form from said separator (302) is injected in to the combustion chamber (408) at pressure exceeding atmospheric pressure to add mass to the gas turbine loop working fluid and produce steam at a supercritical level respectively;
the temperature of the gas turbine loop working fluid (123) leaving the combustion chamber (408) to the gas chamber is limited to thermal limits of the material used in the gas turbine assembly.

5. The combined cycle dual closed loop electric generating system of claim 4, wherein:
said tenth conduit (180m) conveys said gas turbine loop working fluid (123) from said second heat exchanger (111b) to an injection well (110);
said separator (302) expels a part of the gas turbine loop working fluid (123) in liquid form through a ninth conduit (180k) in to a water output (108), and the expelled mass of gas turbine loop working fluid (123) does not exceed the mass of the H2 (114) and 02(116) entering the combustion chamber (408) at an instant;
the gas turbine loop working fluid (123) at the water output (108) is ultra-pure water which can be blended with other available water sources in a controlled manner to improve the final blended water quality that can be used.

6. The combined cycle dual closed loop electric generating system of claim 3, wherein:
said steam turbine loop (103b) further comprises a condenser assembly (128) between said steam turbine assembly (140) and said second pump (160b);
said fifth conduit (180e) conveys said steam turbine loop working fluid (123) from said steam turbine assembly (140) to said condenser assembly (128);
a twelfth conduit (180p) conveys the steam turbine loop working fluid (123) in liquid phase from said condenser assembly (128) to said first heat exchanger (111);
an eleventh conduit (180n) conveys the steam turbine loop working fluid (123) from a water input (104) to said condenser assembly (128) to cool the steam turbine loop working fluid which exits the condenser assembly (128) by a thirteenth conduit (180q) to the water output (108).

7. The combined cycle dual closed loop electric generating system of claim 3, further comprising a boiler (124);
said boiler (124) is capable of heating the steam turbine loop working fluid (123) from the first heat exchanger (111) to the steam turbine assembly (140) of said steam turbine loop (103b) by burning a portion of a natural gas input;
said sixth conduit (180f) conveys said steam turbine loop working fluid (123) from said first heat exchanger (111) to said boiler (124); and
a fourteenth conduit (180r) conveys the steam turbine loop working fluid (123) from said boiler (124) to said steam turbine assembly (140);
the combustion product of said natural gas does not comingle with the steam turbine loop working fluid (123).

8. The combined cycle dual closed loop electric generating system of claim 1, wherein:
said gas turbine loop working fluid and the steam turbine loop working fluid (123) is water which can run in to a water polisher and rust inhibitor;
said gas turbine loop working fluid and the steam turbine loop working fluid (123) does not comingle;
said gas turbine loop working fluid and the steam turbine loop working fluid (123) exists in liquid, vapor, and a mixture of liquid and vapor form at different components of the gas turbine loop (103a) and steam turbine loop (103b) .

9. The combined cycle dual closed loop electric generating system of claim 1, wherein:
said first portion of the electric output (106) is generated when the gas turbine loop working fluid (123) from the combustion chamber (408) enters the gas turbine (410) and turns it;
the gas turbine (410) is attached to the first driveshaft (412) which is attached to the first generator (119) which generates the first portion of the electric output (106);
the second portion of the electric output (106) is generated when the steam turbine loop working fluid (123) from the first heat exchanger (111) enters the steam turbine (428) and turns it;
the steam turbine (428) is attached to the second driveshaft (430) which is attached to the second generator which generates the second portion of the electric output (106);
the first driveshaft (412) and the second driveshaft (430) are not connected to each other;
said first portion and said second portion of said electric output (106) are connected to one or more transformers (156) which are, in turn, connected to a distribution grid (105).

10. The combined cycle dual closed loop electric generating system of claim 2, wherein the separator assembly (113) comprises a separator (302), said separator (302) separates the vapor phase from the liquid phase of the gas turbine loop working fluid (123) entering the separator (302) from the first heat exchanger (111) using an eighth conduit (180h);
the vapor phase of the gas turbine loop working fluid (123) from the separator (302) leaves to the compressor of the gas turbine assembly (118) using a third conduit (180c);
the liquid phase of the gas turbine loop working fluid (123) from the separator (302) leaves to the combustion chamber (408) and the gas turbine assembly (118) using a fourth conduit (180d) regulated by the first pump (160a).

## Patentansprüche

1. Kombizyklus-Stromerzeugungssystem mit zwei geschlossenen Kreisläufen, das Folgendes beinhaltet:
eine Gasturbinenanordnung (118), die eine Brennkammer (408), einen Kompressor (406), eine erste Pumpe (160a), eine erste Antriebswelle (412), eine Gasturbine (410) und einen ersten Generator (119) beinhaltet;
eine Dampfturbinenanordnung (140), die eine zweite Pumpe (160b), eine zweite Antriebswelle (430), eine Dampfturbine (428) und einen zweiten Generator (142) beinhaltet; einen Gasturbinenkreislauf (103a), der ein Arbeitsfluid des Gasturbinenkreislaufs (123) fassen und leiten kann;
einen Dampfturbinenkreislauf (103b), der ein Arbeitsfluid des Dampfturbinenkreislaufs (123) fassen und leiten kann;
**dadurch gekennzeichnet, dass** der genannte Gasturbinenkreislauf (103a) und der genannte Dampfturbinenkreislauf (103b) jeweils ein System mit geschlossenem Kreislauf zum Leiten des genannten Arbeitsfluids des Gasturbinenkreislaufs (123) und des genannten Arbeitsfluids des Dampfturbinenkreislaufs (123) durch die genannte Gasturbinenanordnung (118) und die genannte Dampfturbinenanordnung (140), ohne das genannte Arbeitsfluid des Gasturbinenkreislaufs (123) und das genannte Arbeitsfluid des Dampfturbinenkreislaufs (123) untereinander zu vermischen, beinhalten; das genannte Arbeitsfluid des Gasturbinenkreislaufs und das genannte Arbeitsfluid des Dampfturbinenkreislaufs (123) an verschiedenen Stufen innerhalb der genannten geschlossenen Gasturbinen- und Dampfturbinenkreisläufe eine Flüssigkeit und einen Dampf beinhalten;
das genannte Arbeitsfluid des Gasturbinenkreislaufs (123) die Gasturbinenanordnung (118), die erste Pumpe (160a) und einen ersten Wärmetauscher (111) in der Schleife durchläuft;
das genannte Arbeitsfluid des Dampfturbinenkreislaufs (123) die Dampfturbinenanordnung (140), die zweite Pumpe (160b) und den genannten ersten Wärmetauscher (111) in der Schleife durchläuft;
der genannte erste Wärmetauscher (111) erste Wärmeenergie von dem genannten Gasturbinenkreislauf (103a) zu dem genannten Dampfturbinenkreislauf (103b) überträgt; die genannte Gasturbinenanordnung (118) einen ersten Teil eines elektrischen Ausgangs (106) durch Verbrennen von H₂ und O₂, das die genannte Gasturbine (410) betreibt und den genannten ersten Generator (119) antreibt, erzeugt; und
die genannte Dampfturbinenanordnung (140) einen zweiten Teil des genannten elektrischen Ausgangs (106) erzeugt; und ein Elektrolyseur (112) zum Erzeugen von H₂ (114) und O₂ (116) bereitgestellt ist und Speichertanks (120, 122) zum separaten Speichern des genannten H₂ und O₂ vor Verwendung durch die Gasturbinenanordnung (118) bereitgestellt sind.

2. Kombizyklus-Stromerzeugungssystem mit zwei geschlossenen Kreisläufen nach Anspruch 1,
wobei:
der genannte Gasturbinenkreislauf (103a) Folgendes beinhaltet:
die Gasturbinenanordnung (118), die erste Pumpe (160a) und eine Separatoranordnung (113);
eine erste Leitung (180a), die das Arbeitsfluid des Gasturbinenkreislaufs (123), das eine Abluft beinhaltet, von der genannten Gasturbinenanordnung (118) zu dem genannten ersten Wärmetauscher (111) führt,
eine zweite Leitung (180b), die das Arbeitsfluid des Gasturbinenkreislaufs (123) von dem genannten ersten Wärmetauscher (111) zur Separatoranordnung (113) führt,
eine dritte Leitung (180c), die das Arbeitsfluid des Gasturbinenkreislaufs (123) in einer Dampfphase von der genannten Separatoranordnung (113) zu der genannten Gasturbinenanordnung (118) führt, und
eine vierte Leitung (180d), die das Arbeitsfluid des Gasturbinenkreislaufs (123) in flüssiger Form von der genannten Separatoranordnung (113) zu der genannten Gasturbinenanordnung (118) führt,
die genannte vierte Leitung (180d) die genannte erste Pumpe (160a) beinhaltet, die einen Durchfluss des genannten Arbeitsfluids des Gasturbinenkreislaufs (123) durch die genannte vierte Leitung (180d) regulieren kann; und
die genannte Separatoranordnung (113) das genannte Arbeitsfluid des Gasturbinenkreislaufs (123) in
die Dampfphase und
die flüssige Form trennen kann.

3. Kombizyklus-Stromerzeugungssystem mit zwei geschlossenen Kreisläufen nach Anspruch 1,
wobei:
der genannte Dampfturbinenkreislauf (103b) Folgendes beinhaltet:
die Dampfturbinenanordnung (140), die zweite Pumpe (160b) und den ersten Wärmetauscher (111);
eine fünfte Leitung (180e), die das Arbeitsfluid des Dampfturbinenkreislaufs (123), das Abluft beinhaltet, von der genannten Dampfturbinenanordnung (140) zu dem genannten ersten Wärmetauscher (111) leitet und
eine sechste Leitung (180f) das Arbeitsfluid des Dampfturbinenkreislaufs (123) von dem genannten ersten Wärmetauscher (111) zu der genannten Dampfturbinenanordnung (140) leitet;
der genannte erste Wärmetauscher (111) das genannte Arbeitsfluid des Dampfturbinenkreislaufs (123) erhitzen kann, bevor es wieder in die genannte Dampfturbinenanordnung (140) zurückgeleitet wird; und
die genannte zweite Pumpe (160b) an die genannte fünfte Leitung (180e) angelegt ist und einen Durchfluss des genannten Arbeitsfluids des Dampfturbinenkreislaufs (123) von der genannten Dampfturbinenanordnung (140) zu einem zweiten Wärmetauscher (111b) regulieren kann;
der genannte erste Wärmetauscher (111) Wärmeenergie von dem genannten Arbeitsfluid des Gasturbinenkreislaufs (123) der genannten Gasturbinenanordnung (118) auf das Arbeitsfluid des Dampfturbinenkreislaufs (123) der Dampfturbinenanordnung (140) von einer Kondensatoranordnung (128), das durch die genannte zweite Pumpe (160b) reguliert wird, überträgt.

4. Kombizyklus-Stromerzeugungssystem mit zwei geschlossenen Kreisläufen nach Anspruch 2,
wobei:
die genannte Separatoranordnung (113) einen zweiten Wärmetauscher (1 1 1b) und einen Separator (302) beinhaltet; die genannte zweite Leitung (180b) das genannte Arbeitsfluid des Gasturbinenkreislaufs (123) von dem genannten ersten Wärmetauscher (111) zu dem genannten zweiten Wärmetauscher (111b) leitet;
eine siebte Leitung (180g) das Arbeitsfluid des Gasturbinenkreislaufs (123) von einem Wassereingang (104) zu dem genannten zweiten Wärmetauscher (111b) und nach dem Kühlen des Arbeitsfluids des Gasturbinenkreislaufs, das in den zweiten Wärmetauscher (111b) eintritt und in einer achten Leitung (180h) zum Separator (302) austritt, und in eine zehnte Leitung (180m) leitet;
das Arbeitsfluid des Gasturbinenkreislaufs (123) in Dampfform aus dem genannten Separator (302) unter Verwendung der dritten Leitung (180c) in den genannten Kompressor (406) eintritt;
das Arbeitsfluid des Gasturbinenkreislaufs (123) in flüssiger Form aus dem genannten Separator (302) unter Verwendung der vierten Leitung (180d) in die genannte Brennkammer (408) eintritt;
der H₂ (114) und der O₂ (116) aus ihren jeweiligen Speichertanks (120, 122) in die genannte Brennkammer (408) eintreten und in der Brennkammer (408) in einem Verhältnis von 1 kg H₂ zu 8 kg O₂ gemischt unter Überdruck verbrannt werden;
das verdichtete Arbeitsfluid des Gasturbinenkreislaufs (123) in Dampfform aus dem genannten Kompressor (406) und das Arbeitsfluid des Gasturbinenkreislaufs (123) in flüssiger Form aus dem genannten Separator (302) bei einem Überdruck in die Brennkammer (408) eingespritzt werden, um dem Arbeitsfluid des Gasturbinenkreislaufs Masse zuzusetzen bzw. um Dampf auf überkritischem Niveau zu erzeugen;
die Temperatur des die Brennkammer (408) zur Gaskammer verlassenden Arbeitsfluids des Gasturbinenkreislaufs (123) auf thermische Beschränkungen des in der Gasturbinenanordnung verwendeten Materials beschränkt ist.

5. Kombizyklus-Stromerzeugungssystem mit zwei geschlossenen Kreisläufen nach Anspruch 4,
wobei:
die genannte zehnte Leitung (180m) das genannte Arbeitsfluid des Gasturbinenkreislaufs (123) von dem genannten zweiten Wärmetauscher (111b) zu einer Einpresssonde (110) leitet;
der genannte Separator (302) einen Teil des Arbeitsfluids des Gasturbinenkreislaufs (123) in flüssiger Form durch eine neunte Leitung (180k) in einen Wasserausgang (108) ausstößt und die ausgestoßene Masse von Arbeitsfluid des Gasturbinenkreislaufs (123) die zu einem Zeitpunkt in die Brennkammer (408) eintretende Masse des H₂ (114) und des O₂ (116) nicht übersteigt;
das Arbeitsfluid des Gasturbinenkreislaufs (123) am Wasserausgang (108) ultrareines Wasser ist, das mit anderen verfügbaren Wasserquellen kontrolliert gemischt werden kann, um die endgültige Qualität des Mischwassers, die verwendet werden kann, zu verbessern.

6. Kombizyklus-Stromerzeugungssystem mit zwei geschlossenen Kreisläufen nach Anspruch 3,
wobei:
der genannte Dampfturbinenkreislauf (103b) ferner eine Kondensatoranordnung (128) zwischen der genannten Dampfturbinenanordnung (140) und der genannten zweiten Pumpe (160b) beinhaltet;
die genannte fünfte Leitung (180e) das genannte Arbeitsfluid des Dampfturbinenkreislaufs (123) von der genannten Dampfturbinenanordnung (140) zu der genannten Kondensatoranordnung (128) leitet;
eine zwölfte Leitung (180p) das Arbeitsfluid des Dampfturbinenkreislaufs (123) in flüssiger Phase von der genannten Kondensatoranordnung (128) zu dem genannten ersten Wärmetauscher (111) leitet;
eine elfte Leitung (180n) das Arbeitsfluid des Dampfturbinenkreislaufs (123) von einem Wassereingang (104) zu der genannten Kondensatoranordnung (128) leitet, um das Arbeitsfluid des Dampfturbinenkreislaufs zu kühlen, das über eine dreizehnte Leitung (180q) aus der Kondensatoranordnung (128) zum Wasserausgang (108) austritt.

7. Kombizyklus-Stromerzeugungssystem mit zwei geschlossenen Kreisläufen nach Anspruch 3, das ferner einen Heizkessel (124) beinhaltet;
wobei der genannte Heizkessel (124) das Arbeitsfluid des Dampfturbinenkreislaufs (123) vom ersten Wärmetauscher (111) zur Dampfturbinenanordnung (140) des genannten Dampfturbinenkreislaufs (103b) durch Verbrennen eines Teils von eingespeistem Erdgas erhitzen kann;
die genannte sechste Leitung (180f) das genannte Arbeitsfluid des Dampfturbinenkreislaufs (123) von dem genannten ersten Wärmetauscher (111) zum genannten Heizkessel (124) leitet; und
eine vierzehnte Leitung (180r) das Arbeitsfluid des Dampfturbinenkreislaufs (123) von dem genannten Heizkessel (124) zur genannten Dampfturbinenanordnung (140) leitet;
das Verbrennungsprodukt des genannten Erdgases sich nicht mit dem Arbeitsfluid des Dampfturbinenkreislaufs (123) vermischt.

8. Kombizyklus-Stromerzeugungssystem mit zwei geschlossenen Kreisläufen nach Anspruch 1,
wobei:
das genannte Arbeitsfluid des Gasturbinenkreislaufs und Arbeitsfluid des Dampfturbinenkreislaufs (123) Wasser ist, das in einen Wasseraufbereiter und Rostschutz fließen kann;
das genannte Arbeitsfluid des Gasturbinenkreislaufs und Arbeitsfluid des Dampfturbinenkreislaufs (123) sich nicht vermischen;
das genannte Arbeitsfluid des Gasturbinenkreislaufs und Arbeitsfluid des Dampfturbinenkreislaufs (123) an verschiedenen Komponenten des Gasturbinenkreislaufs (103a) und des Dampfturbinenkreislaufs (103b) in flüssiger, Dampf- und Flüssigkeit-Dampf-Gemisch-Form vorhanden ist.

9. Kombizyklus-Stromerzeugungssystem mit zwei geschlossenen Kreisläufen nach Anspruch 1,
wobei:
der genannte erste Teil des elektrischen Ausgangs (106) erzeugt wird, wenn das Arbeitsfluid des Gasturbinenkreislaufs (123) von der Brennkammer (408) in die Gasturbine (410) eintritt und sie dreht;
die Gasturbine (410) an der ersten Antriebswelle (412) angebracht ist, die am ersten Generator (119) angebracht ist, der den ersten Teil des elektrischen Ausgangs (106) erzeugt;
der zweite Teil des elektrischen Ausgangs (106) erzeugt wird, wenn das Arbeitsfluid des Dampfturbinenkreislaufs (123) vom ersten Wärmetauscher (111) in die Dampfturbine (428) eintritt und sie dreht;
die Dampfturbine (428) an der zweiten Antriebswelle (430) angebracht ist, die am zweiten Generator angebracht ist, der den zweiten Teil des elektrischen Ausgangs (106) erzeugt;
die erste Antriebswelle (412) und die zweite Antriebswelle (430) nicht miteinander verbunden sind;
der genannte erste Teil und der genannte zweite Teil des genannten elektrischen Ausgangs (106) mit ein oder mehr Transformatoren (156) verbunden sind, die wiederum mit einem Verteilungsnetz (105) verbunden sind.

10. Kombizyklus-Stromerzeugungssystem mit zwei geschlossenen Kreisläufen nach Anspruch 2,
wobei die Separatoranordnung (113) einen Separator (302) beinhaltet, der genannte Separator (302) die Dampfphase von der flüssigen Phase des Arbeitsfluids des Gasturbinenkreislaufs (123) trennt, das unter Verwendung der achten Leitung (180h) von dem ersten Wärmetauscher (111) her in den Separator (302) eintritt;
die Dampfphase des Arbeitsfluids des Gasturbinenkreislaufs (123) aus dem Separator (302) unter Verwendung einer dritten Leitung (180c) zum Kompressor der Gasturbinenanordnung (118) austritt;
die flüssige Phase des Arbeitsfluids des Gasturbinenkreislaufs (123) aus dem Separator (302), von der ersten Pumpe reguliert, unter Verwendung einer vierten Leitung (180d) zur Brennkammer (408) und zur Gasturbinenanordnung (118) austritt.

## Revendications

1. Système de génération électrique à double boucle fermée en cycle combiné, comprenant :
un ensemble turbine à gaz (118) comprenant une chambre de combustion (408), un compresseur (406), une première pompe (160a), un premier arbre de transmission (412), une turbine à gaz (410) et un premier générateur (119) ;
un ensemble turbine à vapeur (140) comprenant une deuxième pompe (160b), un deuxième arbre de transmission (430), une turbine à vapeur (428) et un deuxième générateur (142) ;
une boucle de turbine à gaz (103a) apte à contenir et à acheminer un fluide de travail de boucle de turbine à gaz (123) ;
une boucle de turbine à vapeur (103b) apte à contenir et à acheminer un fluide de travail de boucle de turbine à vapeur (123) ;
**caractérisé en ce que** ladite boucle de turbine à gaz (103a) et ladite boucle de turbine à vapeur (103b) comprennent chacune un système en boucle fermée pour acheminer ledit fluide de travail de boucle de turbine à gaz (123) et ledit fluide de travail de turbine à vapeur (123) à travers ledit ensemble turbine à gaz (118) et ledit ensemble turbine à vapeur (140) sans mélanger ledit fluide de travail de boucle de turbine à gaz (123) et ledit fluide de travail de boucle de turbine à vapeur (123) l'un avec l'autre ; ledit fluide de travail de boucle de turbine à gaz et ledit fluide de travail de boucle de turbine à vapeur (123) comprenant un liquide et une vapeur à différents stades au sein desdites boucles fermées de turbine à vapeur et de turbine à gaz ;
ledit fluide de travail de boucle de turbine à gaz (123) circule à travers l'ensemble turbine à gaz (118), la première pompe (160a) et un premier échangeur de chaleur (111) ;
ledit fluide de travail de boucle de turbine à vapeur (123) circule à travers l'ensemble turbine à vapeur (140), la deuxième pompe (160b) et ledit premier échangeur de chaleur (111) ;
ledit premier échangeur de chaleur (111) transfère la première énergie thermique à partir de ladite boucle de turbine à gaz (103a) vers ladite boucle de turbine à vapeur (103b) ; ledit ensemble turbine à gaz (118) génère une première portion d'une sortie électrique (106) en brûlant le H₂ et l'O₂ permettant de faire fonctionner ladite turbine à gaz (410) et d'entraîner ledit premier générateur (119) ; et
ledit ensemble turbine à vapeur (140) génère une deuxième portion de ladite sortie électrique (106) ; et un électrolyseur (112) est prévu pour générer le H₂ (114) et l'O₂ (116) et des réservoirs de stockage (120, 122) sont prévus pour stocker lesdits H₂ et O₂ séparément, avant leur utilisation par l'ensemble turbine à gaz (118).

2. Système de génération électrique à double boucle fermée en cycle combiné de la revendication 1, dans lequel :
ladite boucle de turbine à gaz (103a) comprend
l'ensemble turbine à gaz (118), la première pompe (160a) et un ensemble séparateur (113) ;
un premier conduit (180a) acheminant le fluide de travail de boucle de turbine à gaz (123) comprenant un échappement se rendant dudit ensemble turbine à gaz (118) vers ledit premier échangeur de chaleur (111),
un deuxième conduit (180b) acheminant le fluide de travail de boucle de turbine à gaz (123) à partir dudit premier échangeur de chaleur (111) vers l'ensemble séparateur (113),
un troisième conduit (180c) acheminant le fluide de travail de boucle de turbine à gaz (123) dans une phase vapeur à partir dudit ensemble séparateur (113) vers ledit ensemble turbine à gaz (118), et
un quatrième conduit (180d) acheminant le fluide de travail de boucle de turbine à gaz (123) en forme liquide à partir dudit ensemble séparateur (113) vers ledit ensemble turbine à gaz (118) ;
ledit quatrième conduit (180d) comprend ladite première pompe (160a) apte à réguler un débit dudit fluide de travail de boucle de turbine à gaz (123) à travers ledit quatrième conduit (180d) ; et
ledit ensemble séparateur (113) est apte à séparer ledit fluide de travail de boucle de turbine à gaz (123) en
la phase vapeur et
la forme liquide.

3. Système de génération électrique à double boucle fermée en cycle combiné de la revendication 1, dans lequel :
ladite boucle de turbine à vapeur (103b) comprend
l'ensemble turbine à vapeur (140), la deuxième pompe (160b) et le premier échangeur de chaleur (111) ;
un cinquième conduit (180e) acheminant le fluide de travail de boucle de turbine à vapeur (123) comprenant un échappement se rendant dudit ensemble turbine à vapeur (140) vers ledit premier échangeur de chaleur (111), et
un sixième conduit (180f) acheminant le fluide de travail de boucle de turbine à vapeur (123) à partir dudit premier échangeur de chaleur (111) vers ledit ensemble turbine à vapeur (140) ;
ledit premier échangeur de chaleur (111) étant apte à chauffer ledit fluide de travail de boucle de turbine à vapeur (123) avant d'être acheminé en retour vers ledit ensemble turbine à vapeur (140) ; et
ladite deuxième pompe (160b) est placée sur ledit cinquième conduit (180e) et apte à réguler un débit dudit fluide de travail de boucle de turbine à vapeur (123) se rendant dudit ensemble turbine à vapeur (140) vers un deuxième échangeur de chaleur (111b);
ledit premier échangeur de chaleur (111) transfère l'énergie thermique à partir dudit fluide de travail de boucle de turbine à gaz (123) dudit ensemble turbine à gaz (118) vers le fluide de travail de boucle de turbine à vapeur (123) de l'ensemble turbine à vapeur (140) à partir d'un ensemble condenseur (128) régulé par ladite deuxième pompe (160b).

4. Système de génération électrique à double boucle fermée en cycle combiné de la revendication 2, dans lequel :
ledit ensemble séparateur (113) comprend un deuxième échangeur de chaleur (111b) et un séparateur (302) ; ledit deuxième conduit (180b) achemine ledit fluide de travail de boucle de turbine à gaz (123) à partir dudit premier échangeur de chaleur (111) vers ledit deuxième échangeur de chaleur (111b) ;
un septième conduit (180g) achemine le fluide de travail de boucle de turbine à gaz (123) à partir d'une entrée d'eau (104) vers ledit deuxième échangeur de chaleur (111b) et dans un dixième conduit (180m) après le refroidissement du fluide de travail de boucle de turbine à gaz qui entre dans le deuxième échangeur de chaleur (111b) et sort dans un huitième conduit (180h) vers le séparateur (302) ;
le fluide de travail de boucle de turbine à gaz (123) en forme vapeur provenant dudit séparateur (302) entre dans ledit compresseur (406) en utilisant le troisième conduit (180c) ;
le fluide de travail de boucle de turbine à gaz (123) en forme liquide provenant dudit séparateur (302) entre dans ladite chambre de combustion (408) en utilisant le quatrième conduit (180d) ;
le H₂ (114) et l'O₂ (116) provenant de leurs réservoirs de stockage respectifs (120, 122) entrent dans ladite chambre de combustion (408) et sont brûlés dans la chambre de combustion (408) mélangés suivant un rapport de 1 kg de H₂ et 8 kg d'O₂ sous une pression supérieure à l'atmosphère ;
le fluide de travail de boucle de turbine à gaz comprimé (123) en forme vapeur provenant dudit compresseur (406) et le fluide de travail de boucle de turbine à gaz (123) en forme liquide provenant dudit séparateur (302) sont injectés dans la chambre de combustion (408) à une pression dépassant la pression atmosphérique afin d'ajouter de la masse au fluide de travail de boucle de turbine à gaz et de produire de la vapeur à un niveau supercritique respectivement ;
la température du fluide de travail de boucle de turbine à gaz (123) quittant la chambre de combustion (408) vers la chambre à gaz est limitée aux limites thermiques du matériau utilisé dans l'ensemble turbine à gaz.

5. Système de génération électrique à double boucle fermée en cycle combiné de la revendication 4, dans lequel :
ledit dixième conduit (180m) achemine ledit fluide de travail de boucle de turbine à gaz (123) à partir dudit deuxième échangeur de chaleur (111b) vers un puits d'injection (110) ;
ledit séparateur (302) évacue une partie du fluide de travail de boucle de turbine à gaz (123) en forme liquide à travers un neuvième conduit (180k) jusqu'à une sortie d'eau (108), et la masse évacuée du fluide de travail de boucle de turbine à gaz (123) ne dépasse pas la masse de H₂ (114) et d'O₂ (116) entrant dans la chambre de combustion (408) à un certain instant ;
le fluide de travail de boucle de turbine à gaz (123) au niveau de la sortie d'eau (108) est de l'eau ultra-pure qui peut être mélangée à d'autres sources d'eau disponibles selon une manière contrôlée afin d'améliorer la qualité finale de l'eau mélangée qui peut être utilisée.

6. Système de génération électrique à double boucle fermée en cycle combiné de la revendication 3, dans lequel :
ladite boucle de turbine à vapeur (103b) comprend en outre un ensemble condenseur (128) entre ledit ensemble turbine à vapeur (140) et ladite deuxième pompe (160b) ;
ledit cinquième conduit (180e) achemine ledit fluide de travail de boucle de turbine à vapeur (123) à partir dudit ensemble turbine à vapeur (140) vers ledit ensemble condenseur (128) ;
un douzième conduit (180p) achemine le fluide de travail de boucle de turbine à vapeur (123) en phase liquide à partir dudit ensemble condenseur (128) vers ledit premier échangeur de chaleur (111) ;
un onzième conduit (180n) achemine le fluide de travail de boucle de turbine à vapeur (123) à partir d'une entrée d'eau (104) vers ledit ensemble condenseur (128) afin de refroidir le fluide de travail de boucle de turbine à vapeur qui sort de l'ensemble condenseur (128) par un treizième conduit (180q) vers la sortie d'eau (108).

7. Système de génération électrique à double boucle fermée en cycle combiné de la revendication 3, comprenant en outre une chaudière (124) ;
ladite chaudière (124) étant apte à chauffer le fluide de travail de boucle de turbine à vapeur (123) se rendant du premier échangeur de chaleur (111) vers l'ensemble turbine à vapeur (140) de ladite boucle de turbine à vapeur (103b) en brûlant une portion d'une entrée de gaz naturel ;
ledit sixième conduit (180f) achemine ledit fluide de travail de boucle de turbine à vapeur (123) à partir dudit premier échangeur de chaleur (111) vers ladite chaudière (124) ; et
un quatorzième conduit (180r) achemine le fluide de travail de boucle de turbine à vapeur (123) à partir de ladite chaudière (124) vers ledit ensemble turbine à vapeur (140) ;
le produit de combustion dudit gaz naturel ne se mélange pas avec le fluide de travail de boucle de turbine à vapeur (123).

8. Système de génération électrique à double boucle fermée en cycle combiné de la revendication 1, dans lequel :
ledit fluide de travail de boucle de turbine à gaz et le fluide de travail de boucle de turbine à vapeur (123) est de l'eau qui peut passer dans un polisseur d'eau et un inhibiteur de rouille ;
ledit fluide de travail de boucle de turbine à gaz et le fluide de travail de boucle de turbine à vapeur (123) ne se mélangent pas entre eux ;
ledit fluide de travail de boucle de turbine à gaz et le fluide de travail de boucle de turbine à vapeur (123) existent en forme liquide, vapeur, et un mélange de forme liquide et vapeur au niveau de différents composants de la boucle de turbine à gaz (103a) et de la boucle de turbine à vapeur (103b).

9. Système de génération électrique à double boucle fermée en cycle combiné de la revendication 1, dans lequel :
ladite première portion de la sortie électrique (106) est générée lorsque le fluide de travail de boucle de turbine à gaz (123) provenant de la chambre de combustion (408) entre dans la turbine à gaz (410) et la fait tourner ;
la turbine à gaz (410) est attachée au premier arbre de transmission (412) qui est attaché au premier générateur (119) qui génère la première portion de la sortie électrique (106) ;
la deuxième portion de la sortie électrique (106) est générée lorsque le fluide de travail de boucle de turbine à vapeur (123) provenant du premier échangeur de chaleur (111) entre dans la turbine à vapeur (428) et la fait tourner ;
la turbine à vapeur (428) est attachée au deuxième arbre de transmission (430) qui est attaché au deuxième générateur qui génère la deuxième portion de la sortie électrique (106) ;
le premier arbre de transmission (412) et le deuxième arbre de transmission (430) ne sont pas raccordés l'un à l'autre ;
ladite première portion et ladite deuxième portion de ladite sortie électrique (106) sont connectées à un ou plusieurs transformateurs (156) qui sont, à leur tour, connectés à un réseau de distribution (105).

10. Système de génération électrique à double boucle fermée en cycle combiné de la revendication 2, dans lequel l'ensemble séparateur (113) comprend un séparateur (302), ledit séparateur (302) séparant la phase vapeur de la phase liquide du fluide de travail de boucle de turbine à gaz (123) qui entre dans le séparateur (302) à partir du premier échangeur de chaleur (111) en utilisant un huitième conduit (180h) ;
la phase vapeur du fluide de travail de boucle de turbine à gaz (123) provenant du séparateur (302) se rend vers le compresseur de l'ensemble turbine à gaz (118) en utilisant un troisième conduit (180c) ;
la phase liquide du fluide de travail de boucle de turbine à gaz (123) provenant du séparateur (302) se rend vers la chambre de combustion (408) et l'ensemble turbine à gaz (118) en utilisant un quatrième conduit (180d) régulé par la première pompe (160a).
